# EUROPÄISCHE PATENTSCHRIFT

(11) **EP 0 895 049 B1**
(45) Veröffentlichungstag und Bekanntmachung des Hinweises auf die Patenterteilung: **01.10.2003**
(21) Anmeldenummer: 97112725.3
(22) Anmeldetag: 24.07.1997
(51) Int. Cl.: F27B 21/06

(54) **Sinteranlage**
Sintering installation
Installation de frittage

(43) Veröffentlichungstag der Anmeldung: 03.02.1999
(73) Patentinhaber: SIEMENS AKTIENGESELLSCHAFT, 80333 München (DE)
(72) Erfinder: Hums, Eric, Dr., 91093 Hessdorf (DE)
(74) Vertreter: Tergau & Pohl Patentanwälte

(56) Entgegenhaltungen:
- EP-A- 0 559 071
- WO-A-95/27802
- DE-C- 4 105 510
- FR-A- 2 310 794
- JP-A- 60 039 130
- DATABASE WPI Week 8809 Derwent Publications Ltd., London, GB; AN 88062219 XP002049508 & SU 1 323 837 A ((FEPU) FERR METAL AFFL PURIF) , 15.Juli 1987
- DATABASE WPI Week 8912 Derwent Publications Ltd., London, GB; AN 89091991 XP002049511 & SU 1 423 896 A (KRYL-Y) , September 1915

## Beschreibung

Die Erfindung betrifft eine Sinteranlage mit einer Maßnahme zur Verringerung von Dioxinen im Abgas.

Eine Sinteranlage ist eine großtechnische Anlage der Hüttentechnik und dient dem Stückigmachen von feinkörnigen oder feinstaubigen metallischen, metalloxidischen oder metallsulfidischen Feststoffgemischen. Die stückigen Feststoffgemische können dann in einem Hochofen eingesetzt werden.

In der Sinteranlage wird das zu sinternde Material oder Sintergut durch Sintern, d.h. durch Erhitzen bis nahe an den Schmelzpunkt unter oberflächlicher Erweichung und teilweiser Schmelz- und Schlackenbildung, verfestigt. Hierzu wird das Sintergut, welches bei der Erzverhüttung beispielsweise ein Feinerz, ein Kiesabbrand, ein Gichtstaub oder auch ein Feinstaub aus einer metallverarbeitenden Industrie sein kann, eventuell mit Rückgut, schlackenbildenden Zusätzen oder einem festen Brennstoffgemisch auf einen sogenannten Wanderrost aufgebracht. Der Wanderrost ist dabei in der Regel als eine endlose Kette aus einzelnen, zu befüllenden Rostwagen ausgebildet, welche Kette über entsprechende Umlenkrollen in Arbeitsrichtung der Sinteranlage läuft. Die befüllte obere Bahn des Wanderrostes oder des Sinterbandes läuft dabei über einen Saug- oder Druckkasten, in welchem mittels eines Saug- oder Druckgebläses ein Unterdruck bzw. ein Überdruck erzeugt wird, so daß Verbrennungsluft durch die befüllten Rostwagen gesaugt bzw. gedrückt wird. Man kennt heute Sinteranlagen mit Rostbreiten bis zu 5 m und Sauglängen bis zu 150 m.

An einer Einlaßstelle werden die vorbeifahrenden Rostwagen zunächst mit bereits abgeröstetem Rückgut zum Schutz der Roststäbe und anschließend mit dem eventuell mit Brennstoff vermischten Sintergut befüllt. Die befüllten Rostwagen fahren sodann an einem Zündofen entlang, wobei das Sintergut oder der darin enthaltene Brennstoff mittels einer Zündflamme entzündet wird. Der Verbrennungs- und Sintervorgang in den einzelnen Rostwagen schreitet dann durch die Eigenverbrennung mittels der durch das Saug- oder Druckgebläse hindurchgeleiteten Luft von selbst fort, während die Rostwagen mit Hilfe des Sinterbandes zu einer Auslaßstelle transportiert werden.

Zur Führung des Abgases oder des Verbrennungsgases sind in der Sinteranlage eine Reihe von Abzugsleitungen entlang der oberen Bahn des Sinterbandes angeordnet. Das mittels des Saug- oder Druckgebläses durch die einzelnen Rostwagen beförderte Abgas der Abzugsleitungen wird in einer gemeinsamen Abgasleitung gesammelt und gelangt schließlich über einen Kamin in die Umgebung. Zur Rückgewinnung von Feinstäuben und zum Schutz eines nachgeschalteten Sauggebläses ist dabei meist ein Elektrofilter in die Abgasleitung integriert. Die über den Elektrofilter gewonnenen Stäube können erneut der Sinteranlage zugeführt werden.

Ein Großteil des in der Sinteranlage verarbeiteten Sintergutes stellt feinkörniger und feinstaubiger Abrieb aus Feil-, Schleif- oder Bohrprozessen der metallverarbeitenden Industrie dar. Dieser Abrieb ist jedoch nachteiligerweise häufig mit öligen Bohrhilfen, Schmier- oder Kühlmitteln versetzt, welche in nicht unerheblichem Maße halogenierte Kohlenwasserstoffe und Aromaten aufweisen. Bei den thermischen Prozessen während des Sintervorgangs entstehen daher in der Sinteranlage auch Dioxine, welche über das Abgas in die Umwelt gelangen können. Verglichen mit sonstigen großtechnischen Anlagen der Metallgewinnung und Metallverarbeitung stellen Sinteranlagen mithin die größte Quelle für die Emission von Dioxinen dar. So werden in dem Abgas einer Sinteranlage nach dem Elektrofilter Dioxinwerte bis zu 60 ng TE/m³ gefunden (TE = Toxical Equivalents). Der Begriff "Dioxine" wird dabei als Sammelbegriff für die Gruppe der zyklischen halogenierten aromatischen Polyether verwendet. Hierzu gehören insbesondere die zyklischen Ether (Furane) sowie die zyklischen Diether (die eigentlichen Dioxine). Als besonders toxisch wirkende Vertreter beider Gruppen seien hier die polychlorierten Dibenzodioxine (PCDD) und die polychlorierten Dibenzofurane (PCDF) genannt.

Um die von einer Sinteranlage in die Umgebung abgegebene Menge an Dioxinen unterhalb des gesetzlich vorgeschriebenen Grenzwertes (z. Zt. 0,1 ng TE/m³) zu halten, ist es aus W. Weiss: "Minderung der PCDD/PCDF-Emissionen an einer Eisenerzsinteranlage", VDI Berichte Nr. 1298 (1996), Seite 249 ff. bekannt, dem Abgas einer Sinteranlage zur Dioxin-Adsorption als Zuschlagstoff eine Mischung aus Kalziumhydroxid Ca(OH)₂ und Kohle (in Form von Herdofenkoks oder Aktivkohle) zuzugeben und den teilweise mit Dioxinen beladenen Zuschlagstoff mittels eines Gewebefilters dem Abgas wieder zu entnehmen und dem Abgas erneut zuzuführen. Des weiteren ist es aus G. Mayer-Schwinning et al.: "Minderungstechniken zur Abgasreinigung für PCDD/F", VDI Berichte Nr. 1298 (1996), Seite 191 ff. bekannt, Zeolithe als Dioxin-Adsorber im Abgas einer Sinteranlage einzusetzen.

Ein gegenüber der Adsorptions-Technik wesentlich wirksamerer katalytischer Abbau der Dioxine im Abgas einer Sinteranlage mittels eines geeigneten Dioxin-Katalysators ist aufgrund der niedrigen Abgastemperaturen von weniger als 200°C nur mit einer kostspieligen Aufheizung des Abgases möglich. Beladene Dioxin-Adsorber müssen andererseits auf einer Deponie endgelagert werden, was wiederum erhebliche Kosten verursacht und zudem Gefahr für die Umwelt birgt.

Die WO 95 127 802 beschreibt eine Sinteranlage aus deren Sinterzone die Abgase über einen Dioxinkatalysator geführt werden.

Aufgabe der Erfindung ist es, eine Sinteranlage mit einer besonders effektiven und kostengünstigen Maßnahme zur Verringerung von Dioxinen im Abgas anzugeben.

Diese Aufgabe wird erfindungsgemäß gelöst durch die Merkmale des Patentanspruchs 1.

Die Erfindung geht dabei in einem ersten Schritt von der Überlegung aus, daß die niedrigen Temperaturen des Abgases einer Sinteranlage, welche einen katalytischen Abbau der Dioxine unmöglich machen, durch die Sammlung des Abgases aller entlang der Sinterstrecke angeordneter Abzugsleitungen in einer gemeinsamen Abgasleitung bedingt ist. Es werden dabei kühle Abgase aus dem vorderen Abschnitt der Sinterstrecke, in welchem die Verbrennung lediglich an der Oberfläche des sich im Rostwagen befindlichen Sinterguts stattfindet, und heiße Abgase aus dem hinteren Abschnitt der Sinterstrecke, in welchem die Verbrennung das gesamte Sintergut erfaßt hat, gemischt. Aufgrund dieser Mischung bleibt die Temperatur des Abgases in der Abgasleitung stets unterhalb 200°C. Die Temperatur des Abgases in den jeweiligen Abzugsleitungen selbst kann jedoch in Abhängigkeit von dem am Ort der Abzugsleitung stattfindenden Verbrennungsprozeß wesentlich höher sein.

In einem zweiten Schritt wird erkannt, daß das Sintergut nach Zündung entsprechend dem fortschreitenden Verbrennungsprozeß entlang der Sinterstrecke einen typischen Temperaturverlauf zeigt. Dabei enthält dieser Temperaturverlauf mindestens eine erste Zone, in der sich das Sintergut durch Fortschreiten des Verbrennungsvorganges von der Oberfläche in das Innere des Sintergutes auf eine niedrige Temperatur erwärmt, und eine zweite Zone, in der sich das Sintergut bis zur Verbrennungserfassung des vollständigen Sinterguts auf eine hohe Temperatur erwärmt und anschließend wieder abkühlt. Dabei kann das Sintergut am Ende der Sinterstrecke eine hohe Temperatur aufweisen oder auch bereits wieder auf oder unterhalb die niedrige Temperatur der ersten Zone abgekühlt sein. In letzterem Fall existiert am Ende der Sinterstrecke eine weitere "erste Zone".

Es wird ferner von der Überlegung ausgegangen, daß im Temperaturbereich der ersten Zone, d.h. üblicherweise im vorderen Abschnitt der Sinterstrecke, kein nennenswerter Anteil an Dioxinen entsteht und folglich keine Dioxine im Abgas der Abzugsleitungen entlang der ersten Zone enthalten sind. Der weitaus größte Anteil an Dioxinen entsteht hingegen entlang der zweiten Zone, d.h. üblicherweise entlang des hinteren Abschnitts der Sinterstrecke. Dies ist durch den stark temperaturabhängigen Bildungs- und Zerstörungsprozeß der Dioxine sowie durch den in Sinteranlagen auftretenden hohen Anteil an niedrig chlorierten Furanen begründet. Zudem weist das Abgas in den Abzugsleitungen entlang der zweiten Zone eine Temperatur auf, welche einen katalytischen Abbau der Dioxine zuläßt. Diese Temperatur liegt oberhalb 250°C.

Überraschenderweise kann demnach ein katalytischer Abbau von Dioxinen gerade in denjenigem Teilabgas der Sinteranlage vorgenommen werden, welches tatsächlich mit Dioxinen befrachtet ist. Dasjenige Teilabgas in welchem sich aufgrund seiner niedrigen Temperatur kein katalytischer Abbau durchführen läßt, ist auch nicht oder in nur sehr geringem Umfang mit Dioxinen beladen. Aufgrund dieser Erkenntnis braucht zudem der Dioxin-Katalysator nur für einen Teilabgasstrom ausgelegt sein, was mit einer Kostenersparnis verbunden ist.

Durch eine Trennung des Abgases einer Sinteranlage in das im wesentlichen Dioxin-freie Abgas der Abzugsleitungen entlang der ersten Zone und in das Dioxin-befrachtete Abgas in den Abzugsleitungen entlang der zweiten Zone läßt sich demnach die bewährte Technik der katalytischen Dioxin-Beseitigung für das Abgas einer Sinteranlage verwenden. Dabei ist die katalytische Dioxin-Entfernung eine wesentlich effektivere und kostengünstigere Lösung als die Verwendung von sogenannten Dioxin-Adsorbern. Zudem entfallen die hohen Deponie-Kosten für die Entsorgung der beladenen Dioxin-Adsorber.

Als Dioxin-Katalysator eignet sich ein an sich bekannter Katalysator auf der Basis von Titandioxid und Wolframtrioxid mit einem Gewichtsanteil an Vanadinpentoxid zwischen 1 und 25 %, und gegebenenfalls einem weiteren Anteil an Molybdäntrioxid. Auch sind Dioxin-Katalysatoren aus Mischoxiden der vorgenannten Verbindungen möglich. Der Dioxin-Katalysator kann dabei in Waben- oder Plattenform vorliegen, wobei das katalytisch aktive Material auf einen metallischen oder keramischen Träger aufgebracht ist. Es ist aber auch möglich, den Dioxin-Katalysator in Form von Pellets oder in Form einer sonstigen Schüttung einzusetzen.

Die Zuordnung der Abzugsleitungen zu der zweiten oder der ersten Zone hängt von dem tatsächlichen Temperaturverlauf in dem Sintergut und damit insbesondere von der jeweiligen Sinteranlage ab. Dabei wird die zweite Zone derart festgelegt, daß das Abgas in den Abzugsleitungen eine entsprechend hohe Temperatur aufweist und dementsprechend ein katalytischer Abbau der Dioxine vorgenommen werden kann. Ein katalytischer Dioxin-Abbau ist mit den heute bekannten Katalysatoren ab Temperaturen von ca. 250°C möglich.

Bei einer üblichen Sinteranlage für Eisenerz umfaßt die zweite Zone im wesentlichen das hintere Drittel der Sinterstrecke, betrachtet in Transportrichtung des Sintergutes. Es ist daher bei einer Eisenerz-Sinteranlage möglich, die Abzugsleitungen entlang des hinteren Drittels der Sinterstrecke in die zweite Abgasleitung münden zu lassen, die zweite Abgasleitung mit einem Dioxin-Katalysator auszustatten und das so gereinigte Abgas über einen Kamin in die Umgebung abzugeben. Die übrigen Abgasleitungen münden in eine separate erste Abgasleitung, in welcher das Abgas ebenfalls dem Kamin zugeführt und in die Umwelt abgegeben wird. Eine besondere Dioxin-Behandlung des Abgases in der ersten Abgasleitung ist aufgrund des geringen Dioxin-Gehaltes nicht erforderlich.

Gemäß der Erfindung weist die Sinteranlage eine erste und eine zweite separate Abgasleitung auf, wobei eine Anzahl der Abzugsleitungen mittels einer Abzweigung in die erste und in die zweite Abgasleitung mündet, die Abzweigung eine steuerbare Vorrichtung zur Führung des Abgases in die erste oder in die zweite Abgasleitung umfaßt, und der Dioxin-Katalysator in der zweiten Abgasleitung angeordnet ist. Durch die steuerbare Vorrichtung in der Abzweigung der entsprechenden Abzugsleitungen ist es nun möglich, je nach Temperatur des Abgases oder des Sintergutes in der entsprechenden Abzugsleitung das Abgas in die erste Abgasleitung und anschließend ohne Dioxin-Behandlung in die Umwelt abzugeben oder in die zweite Abgasleitung zu führen, dann einer Dioxin-Behandlung an einem Dioxin-Katalysator zu unterziehen und erst danach in die Umwelt abzugeben. Mit einer derartigen Sinteranlage läßt sich unabhängig von der Zusammensetzung des Sintergutes und damit unabhängig von dem Temperaturverlauf in dem Sintergut entlang der Sinterstrecke und insbesondere unabhängig von dem Ort der Dioxin-Entstehung entlang der Sinterstrecke mit einer hohen Flexibilität ein katalytischer Abbau von Dioxinen in dem Abgas erreichen.

Die steuerbare Vorrichtung kann dabei beispielsweise eine Steuerklappe sein, mit dessen Hilfe das Abgas in der entsprechenden Abzugsleitung einmal in die erste und einmal in die zweite Abgasleitung geführt werden kann. Zur Steuerung der Steuerklappe kann beispielsweise ein Temperatursensor vorgesehen sein, welcher vor der Abzweigung in der entsprechenden Abzugsleitung oder im Sintergut selbst angeordnet ist. Mit einem solchen Temperatursensor kann die Temperatur des Abgases oder des Sintergutes überwacht und entsprechend bei einer Unterschreitung eines eingestellten Sollwertes der Temperatur das Abgas in die erste und bei einer Überschreitung in die zweite Abgasleitung mit nachfolgender Dioxin-Entfernung ge-Für die technische Ausführung des Abgasleitungssystems der Sinteranlage ist es günstig, wenn die zweite Abgasleitung in Strömungsrichtung des Abgases hinter dem Dioxin-Katalysator mit der ersten Abgasleitung zusammengeführt ist. Bei einer derartigen Ausführung kann mit einem einzigen Sauggebläse der nötige Unterdruck in allen Abzugsleitungen entlang der Sinterstrecke erreicht werden.

Obschon es sich gezeigt hat, daß das Abgas in den Abzugsleitungen entlang der ersten Zone im wesentlichen Dioxin-frei ist, ist es zur Vermeidung von unvorhergesehenen Dioxin-Emissionen vorteilhaft, wenn die erste Abgasleitung oder die oder jede Abzugsleitung entlang der ersten Zone einen Adsorber zur Entfernung von Dioxinen aus dem Abgas umfaßt. Ein solcher Adsorber ist beispielsweise ein mit einem Adsorbens beschichteter Gewebefilter, welcher in dem entsprechenden Abgaskanal angeordnet ist. Als Adsorbermaterial ist eine Kalk/Aktivkohle- oder eine Kalk/Herdofenkoks-Mischung vorteilhaft.

Ausführungsbeispiele der Erfindung werden anhand einer Zeichnung näher erläutert. Dabei zeigen:
- FIG 1: schematisch eine Sinteranlage mit einer ersten und einer zweiten Abgasleitung mit einem Dioxin-Adsorber bzw. einem Dioxin-Katalysator und einer Anzahl von in die erste und in die zweite Abgasleitung mündenden Abzugsleitungen.
- FIG 2: schematisch den Temperatur verlauf des Abgases in einer Sinteranlage.

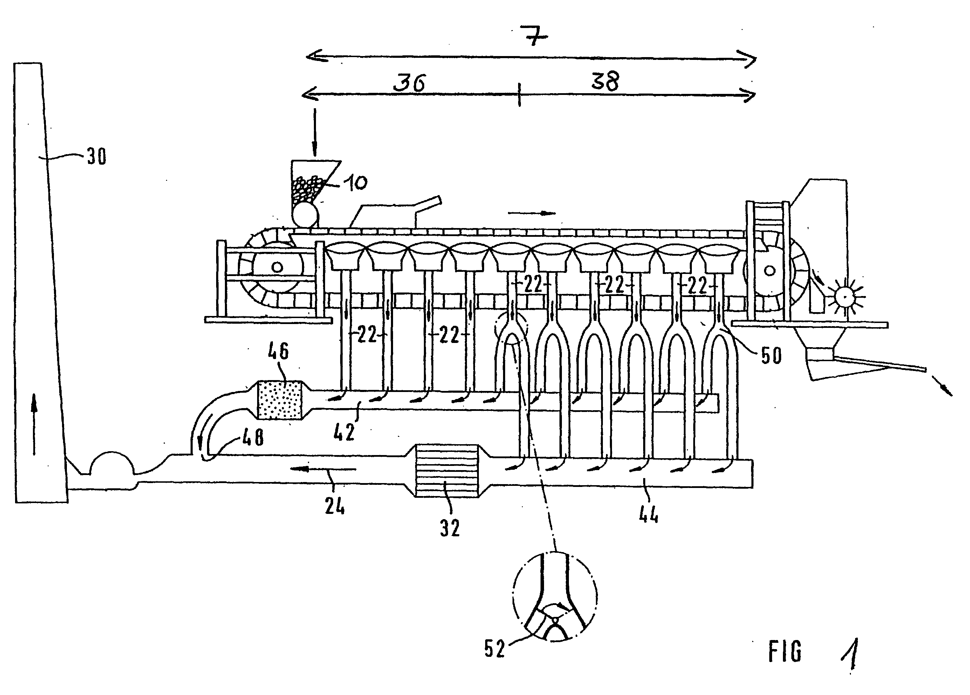

In Figur 1 ist als Ausführungsbeispiel der Erfindung eine Sinteranlage mit einer ersten und zweiten Abgasleitung 42 bzw. 44 gezeigt, wobei die erste Abgasleitung mit einem Dioxin-Adsorber 46 und die zweite Abgasleitung 44 mit einem Dioxin-Katalysator 32 versehen ist. Die erste Abgasleitung 42 ist dabei in Strömungsrichtung des Abgases 24 hinter dem Dioxin-Katalysator 32 über eine Mündung 48 in die zweite Abgasleitung 44 geführt.

Eine Anzahl der Abzugsleitungen 22 ist über eine Abzweigung 50 jeweils in die erste Abgasleitung 42 und in die zweite Abgasleitung 44 geführt. Jede Abzweigung 50 umfaßt dabei eine Steuerklappe 52, mit deren Hilfe es möglich ist, das Abgas 24 entweder in die erste Abgasleitung 42 oder in die zweite Abgasleitung 44 zu lenken. Die Steuerung der Steuerklappe 52 ist dabei abhängig von der Temperatur des Abgases 24 in der jeweiligen Abzugsleitung 22. Die Erfassung der Temperatur geschieht dabei mittels eines nicht dargestellten Temperatursensors in der jeweiligen Abzugsleitung 22. Bei Überschreiten eines entsprechend eingestellten Sollwertes der Temperatur des Abgases 24 wird das Abgas 24 in die zweite Abgasleitung 44 zur Dioxin-Entfernung geleitet; bei Unterschreiten des Sollwertes strömt das Abgas 24 in die erste Abgasleitung 42. Der Grenzwert ist dabei mit ca. 250 °C eingestellt.

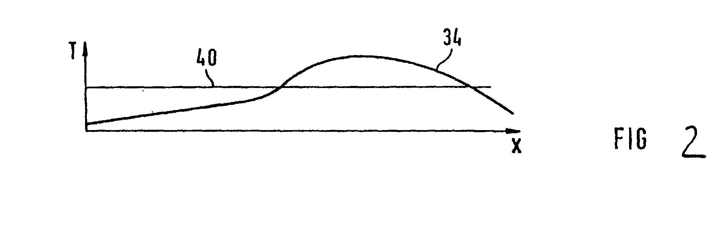

In Figur 2 dargestellt ist der typische Temperaturverlauf 34 des Sintergutes entlang der Sinterstrecke, welcher bei der Sinterung von Eisenerz auftritt. Man erkennt deutlich, daß sich die Temperatur T des Sintergutes 10 in einer ersten Zone 36 während des Fortschreitens des Verbrennungs- und Sintervorgangs auf eine niedrige Temperatur unterhalb des Grenzwertes 40 erwärmt und schließlich entlang einer zweiten Zone 38 den Grenzwert 40 übersteigt. Der Grenzwert 40 ist dabei mit ca. 250°C derart gewählt, daß das Abgas in den Abzugsleitungen 22 entlang der zweiten Zone 38 eine Temperatur aufweist, bei welcher eine katalytische Beseitigung von Dioxinen möglich ist. Entsprechend dem Temperaturverlauf 34 sind im gezeigten Fall die Abzugsleitungen 22 entlang der zweiten Zone 38 jeweils mit einem Dioxin-Katalysator 32 versehen. Das Abgas der Abzugsleitungen 22 entlang der ersten Zone 36 enthält im wesentlichen kein Dioxin und gelangt unbehandelt in die Abgasleitung 42 und anschließend über den Kamin 30 in die Umgebung.

## Patentansprüche

1. Sinteranlage mit einer Sinterstrecke(7) zwischen einer Einlaßstelle (12) und einer Auslaßstelle (16) für Sintergut (10), einer Vorrichtung (2) zum Transport des Sintergutes (10) entlang der Sinterstrecke (7) durchmindestens eine erste Zone (36), in der sich das Sintergut (10) auf eine niedrige Temperatur erwärmt, und durch eine zweite Zone (38), in der sich das Sintergut (10) auf eine höhere Temperatur erwärmt, und einer entlang der Sinterstrecke (7) angeordneten Anzahl von Abzugsleitungen (22) für Abgas (24), wobei die Abgastemperatur der zweiten Zone (38) oberhalb 250°C liegt, und wobei unmittelbar im Anschluß an jede Abzugsleitung (22) der zweiten Zone (38) ein Dioxin-Katalysator (32) zur Verringerung von Dioxinen im Abgas (24) angeordnet ist, **gekennzeichnet durch** eine erste Abgasleitung (42) und eine zweite Abgasleitung (44), wobei eine Anzahl der Abzugsleitungen (22) entlang der zweiten Zone (38) mittels einer Abzweigung (50) in die erste und in die zweite Abgasleitung (42 bzw. 44) mündet, wobei die Abzweigung (50) eine steuerbare Vorrichtung zur Führung des Abgases (24) in die erste oder in die zweite Abgasleitung (42 bzw. 44) umfaßt, und wobei der Dioxin-Katalysator (32) in der zweiten Abgasleitung (44) angeordnet ist.

2. Sinteranlage nach Anapruch 1, wobei die steuerbare Vorrichtung eine Steuerklappe (52) ist.

3. Sinteranlage nach einem der Ansprüche 1 oder 2, wobei die zweite Abgasleitung (44) in Strömungsrichtung des Abgases (24) hinter dem Dioxin-Katalysator (32) mit einer ersten Abgasleitung (42) zusammengeführt ist.

4. Sinteranlage nach einem der Ansprüche 1 bis 3, wobei die erste Abgasleitung (42) einen Adsorber (46) zur Entfernung von Dioxinen aus dem Abgas (24) umfaßt.

## Claims

1. Sintering plant having a sintering section (7) between an inlet location (12) and an outlet location (16) for material to be sintered or sinter material (10), having an apparatus (2) for transporting the sinter material (10) along the sintering section (7) through at least one first zone (36), in which the sinter material (10) is heated to a low temperature, and through a second zone (38), in which the sinter material (10) is heated to a higher temperature, and having a number of discharge lines (22) for exhaust gas (24) that are arranged along the sintering section (7), with the exhaust-gas temperature of the second zone (38) lying above 250°C, and with a dioxin catalytic converter (32) for reducing dioxins in the exhaust gas (24) being arranged directly after each discharge line (22) of the second zone (38), **characterised by** a first exhaust gas line (42) and a second exhaust gas line (44), with a number of the discharge lines (22) along the second zone (38) opening, by means of a branch (50), into the first and into the second exhaust gas line (42 and 44 respectively), with the branch (50) comprising a controllable apparatus for guiding the exhaust gas (24) into the first or into the second exhaust gas line (42 or 44 respectively), and with the dioxin catalytic converter (32) being arranged in the second exhaust gas line (44).

2. Sintering plant according to claim 1, wherein the controllable apparatus is a control valve (52).

3. Sintering plant according to one of claims 1 or 2, wherein the second exhaust gas line (44) is brought together with a first exhaust gas line (42) downstream of the dioxin catalytic converter (32) in the direction of flow of the exhaust gas (24).

4. Sintering plant according to one of claims 1 to 3, wherein the first exhaust gas line (42) comprises an adsorber (46) for removing dioxins from the exhaust gas (24).

## Revendications

1. Installation d'agglomération par frittage comprenant une section (7) d'agglomération entre un point (12) d'entrée et un point (16) de sortie de produit (10) à agglomérer, un dispositif (2) de transport du produit (10) à agglomérer le long de la section (7) d'agglomération en passant par au moins une première zone (36) dans laquelle le produit (10) à agglomérer est porté à une température basse et par une deuxième zone (38) dans laquelle le produit (10) à agglomérer est porté à une température plus haute et un certain nombre de conduits (22), disposés le long de la section (7) d'agglomération, d'évacuation des gaz brûlés (24), la température des gaz brûlés de la deuxième zone (138) étant supérieure à 250°C et un catalyseur (32) de dioxines destiné à diminuer les teneurs en dioxine dans les gaz brûlés (24) étant disposé juste après chaque conduit (22) d'évacuation de la deuxième zone (38), **caractérisée par** un premier conduit (42) pour les gaz brûlés et par un deuxième conduit (44) pour les gaz brûlés, un certain nombre des conduits (22) d'évacuation débouchant le long de la deuxième zone (138) au moyen d'une dérivation (50) dans le premier conduit (42) pour les gaz d'échappement et dans le deuxième conduit (44) pour les gaz d'échappement, la dérivation (50) comprenant un dispositif qui peut être commandé et qui est destiné à faire passer les gaz brûlés (24) dans le premier ou dans le deuxième conduit (42 ou 44) pour les gaz brûlés et le catalyseur (32) de dioxines étant disposé dans le deuxième conduit (44) pour les gaz brûlés.

2. Installation d'agglomération par frittage suivant la revendication 1, dans laquelle le dispositif qui peut être commandé est un volet (52) de commande.

3. Installation d'agglomération par frittage suivant la revendication 1 ou 2, dans laquelle le deuxième conduit (44) pour les gaz brûlés est réuni en aval, considéré dans la direction de passage des gaz brûlés (24), du catalyseur (32) de dioxines à un premier conduit (42) pour les gaz brûlés.

4. Installation d'agglomération par frittage suivant l'une des revendications 1 à 3, dans laquelle le premier conduit (42) pour les gaz brûlés comprend un adsorbant (46) pour éliminer des dioxines des gaz brûlés (24).
